Europäisches Patentamt

European Patent Office

Office européen des brevets

(19)

(11) Numéro de publication : **0 079 403**
**B1**

(12)

# FASCICULE DE BREVET EUROPÉEN

(45) Date de publication du fascicule du brevet :
24.04.85

(51) Int. Cl.⁴ : **B 29 C 67/20**

(21) Numéro de dépôt : **81201273.0**

(22) Date de dépôt : **18.11.81**

(54) Installation pour la fabrication de panneaux en matière synthétique expansée.

(43) Date de publication de la demande :
25.05.83 Bulletin 83/21

(45) Mention de la délivrance du brevet :
24.04.85 Bulletin 85/17

(84) Etats contractants désignés :
AT BE CH DE FR GB IT LI LU NL SE

(56) Documents cités :
FR-A- 1 097 822
FR-A- 2 328 561
US-A- 3 030 687
US-A- 3 035 280

(73) Titulaire : FRESSE S.A.
En Gottau
CH-1618 Chatel-St-Denis (CH)

(72) Inventeur : Besse, Maurice
Derrière les Corbelets
CH-1854 Leysin (CH)
Inventeur : Grisoni, Jacques
Route des Monts 410
CH-1602 La Croix-sur-Lutry (CH)

(74) Mandataire : Meylan, Robert Maurice
c/o BUGNION S.A. 10, route de Florissant Case
Postale 375
CH-1211 Genève 12 - Champel (CH)

## Description

La présente invention a pour objet une installation pour la fabrication de panneaux en matière synthétique expansée à la vapeur présentant deux groupes de passages tubulaires rectilignes parallèles, croisés, communiquant entre eux.

De tels panneaux sont utilisés, par exemple, pour la construction comme décrit dans la demande de brevet EP-A-0 031 171, dans laquelle il est prévu de remplir les passages tubulaires du panneau de béton. Jusqu'ici il était nécessaire de réaliser ces panneaux en deux parties moulées séparément de manière à présenter deux groupes d'empreintes formant, après réunion et collage des deux parties, les passages tubulaires désirés. Cette fabrication nécessite donc un ajustement des deux parties afin de mettre en place un chemisage ou autre matière en carton dans les passages tubulaires.

La présente invention a pour but de réaliser un tel panneau en une seule pièce, c'est-à-dire en une seule opération, de manière à obtenir des passages tubulaires précis, un panneau plus homogène et d'un prix de revient beaucoup plus bas.

A cet effet, l'installation selon l'invention est caractérisée par le fait qu'elle comprend une chambre de vapeur étanche parallélépipédique rectangulaire munie d'une porte sur un petit côté, à l'intérieur de laquelle est fixé, à distance des parois de la chambre, un moule fixe tubulaire en tôle perforée, de forme correspondant à la forme extérieure du panneau à obtenir, une première batterie de tubes métalliques perforés, parallèles, fixes, à l'intérieur du moule, correspondant à l'un des groupes de passages tubulaires à obtenir dans le panneau, ces tubes présentant des trous latéraux pour le passage d'une seconde batterie de tubes métalliques, perforés ou non, solidaires d'un support extérieur mobile, traversant l'une des petites parois de la chambre de vapeur et susceptibles de se déplacer perpendiculairement aux tubes de la première batterie, en traversant ceux-ci, cette seconde batterie de tubes correspondant au deuxième groupe de passages tubulaires, au moins : une vanne d'entrée pour la matière synthétique partiellement expansée, une entrée pour la vapeur et pour un fluide de refroidissement, un extracteur travaillant parallèlement aux tubes du premier groupe pour pousser le panneau moulé hors du moule en le faisant glisser sur les tubes du premier groupe, l'une des extrémités des tubes situés à l'intérieur de la chambre de vapeur est fermée en position de moulage, et munie d'une buse pour l'injection d'un liquide de refroidissement tandis que l'autre communique avec la chambre de vapeur et que les extrémités des tubes mobiles situées à l'extérieur sont ouvertes.

L'installation selon l'invention ne comporte donc, outre la porte, qu'une seule partie mobile, constituée par l'une des batteries de tubes. Une telle installation est par conséquent relativement peu coûteuse et simple à construire. En outre, l'utilisation d'une batterie de tubes fixes a non seulement pour effet de simplifier la construction, mais permet un démoulage par poussée avant le refroidissement complet de la matière expansée, par exemple déjà à une température de 25 à 30 °C, sans risque de déformation, les tubes soutenant le panneau tandis qu'il glisse sur ceux-ci. D'ailleurs le refroidissement du panneau se faisant également par l'intérieur des tubes fixes, le liquide de refroidissement étant injecté aussi par les extrémités fermées portant les buses, il n'est pas nécessaire d'attendre que toute la masse du panneau soit complètement refroidie car les parois refroidies des passages tubulaires et du panneau sont capables de soutenir le panneau pour son refroidissement intégral à l'extérieur du moule. En l'absence des tubes, il serait nécessaire d'attendre que le panneau se soit refroidi à une température d'environ 15 °C. Ceci représente donc un gain de temps et d'énergie considérable. En raison du fait que les tubes mobiles sont perforés et qu'ils communiquent avec l'extérieur, la vapeur sous pression introduite dans la chambre de vapeur et les tubes fixes diffuse rapidement à travers les billes de matière expansible, de préférence du polystyrène, pour pénétrer dans les tubes mobiles à travers leurs perforations, tubes dans lesquels règne une pression inférieure à la surpression de la vapeur. Cette diffusion peut être renforcée en créant une dépression forcée dans ces tubes. Cette diffusion rapide de la vapeur assure un échauffement quasi uniforme des billes de polystyrène permettant d'obtenir un panneau homogène de bonne qualité. Une mauvaise diffusion de la vapeur aurait pour effet de créer une croûte extérieure isolante empêchant l'échauffement des billes de polystyrène situées à l'intérieur. Lorsque les tubes fixes sont proches l'un de l'autre, et de diamètres sensiblement plus grands que les tubes mobiles, il est possible d'utiliser des tubes mobiles non perforés, la surface perforée des tubes fixes suffisant amplement à assurer une bonne diffusion de la vapeur. Après l'expansion du polystyrène, on effectue un refroidissement forcé de la matière expansée en introduisant un fluide de refroidissement à la place de la vapeur, généralement de l'eau pulvérisée dans un courant d'air.

Le dessin annexé représente, à titre d'exemple, une forme d'exécution de l'invention.

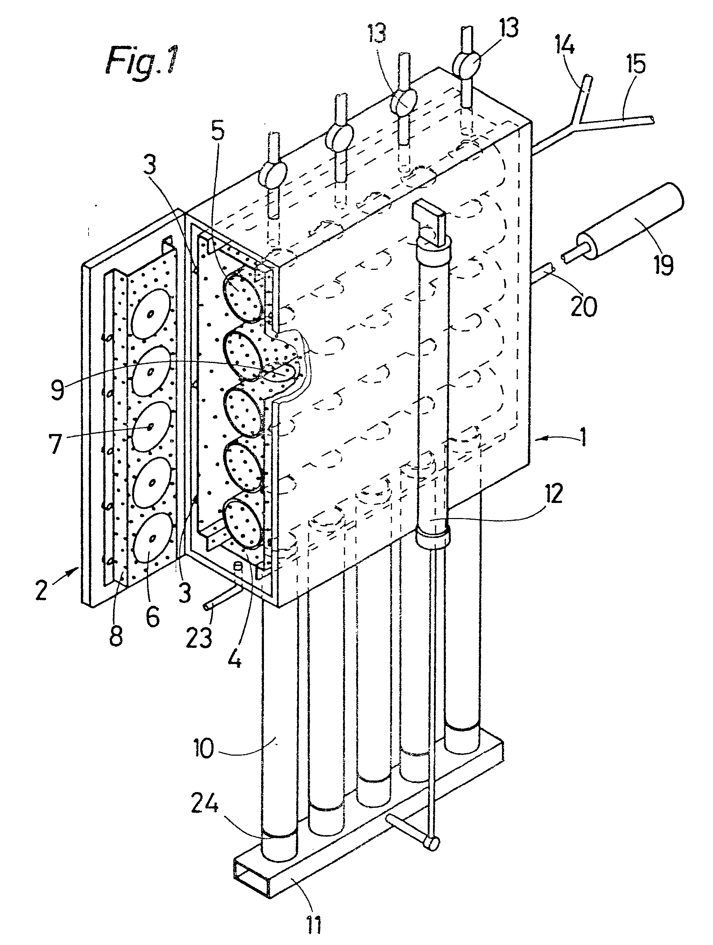

La figure 1 est une vue générale et en perspective de l'installation.

La figure 2 est une vue de droite et en coupe de la figure précédente.

La figure 3 est une vue en coupe selon la ligne III-III.

L'installation comporte une chambre 1 parallélépipédique rectangulaire étanche fermée par une porte 2 à double paroi. A l'intérieur de la chambre et à distance de ses parois est fixé par des entretoises 3 un moule 4 en tôle perforée de forme correspondant à la forme extérieure du panneau. Une première batterie de tubes 5 cylindriques parallèles en tôle perforée et ouverts aux deux extrémités est fixée à l'intérieur du moule 4 par l'une de leur extrémité communiquant avec la chambre de vapeur 1. La seconde extrémité de tubes 5 est fermée, en position de moulage, par des zones étanches 6 de la seconde paroi 8 en tôle perforée de la porte 2 et qui constitue la petite face manquante du moule 4. Le diamètre des zones étanches 6 est légèrement supérieur à celui des extrémités de tubes 5 et elles sont munies à leur centre d'une buse 7 pour l'injection du liquide de refroidissement. Les tubes 5 sont munis de trous latéraux 9 pour permettre le passage d'une seconde batterie de tubes mobiles 10 perpendiculaires aux premiers. Les tubes 10 sont en tôle non perforée si les tubes fixes 5 sont proches et de diamètre sensiblement plus grand que les tubes mobiles et en tôle perforée dans les autres cas. Les tubes mobiles 10 communiquent avec le support creux 11 sur lequel ils sont fixés. Le déplacement de la seconde batterie de tubes 10 est assuré par un ou deux vérins 12 disposés de part et d'autre de la chambre 1. Les tubes 10 passent à travers la petite face inférieure de la chambre de vapeur 1 et du moule 4 leur extrémité supérieure perforée venant en appui contre des zones non perforées de la face supérieure du moule 4 en position de moulage. L'étanchéité de la chambre 1 étant assurée par des joints O-ring 24 fixés près de l'extrémité inférieure des tubes 10. Plusieurs vannes 13 commandent l'entrée de la matière synthétique partiellement expansée à l'intérieur du moule 4. Des entrées 14 et 15 assurent respectivement et successivement l'entrée de la vapeur et du liquide de refroidissement à l'intérieur de la chambre 1.

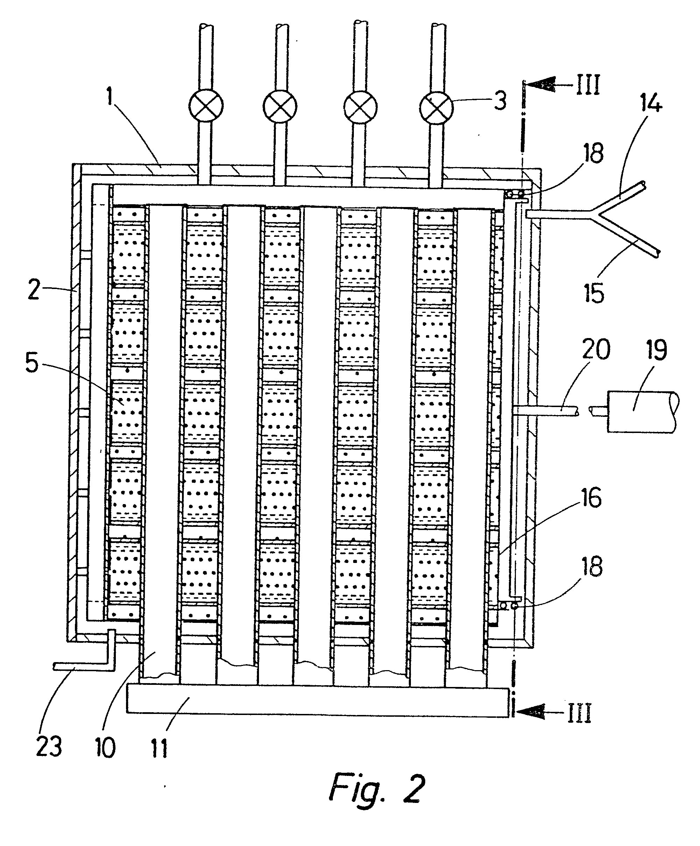

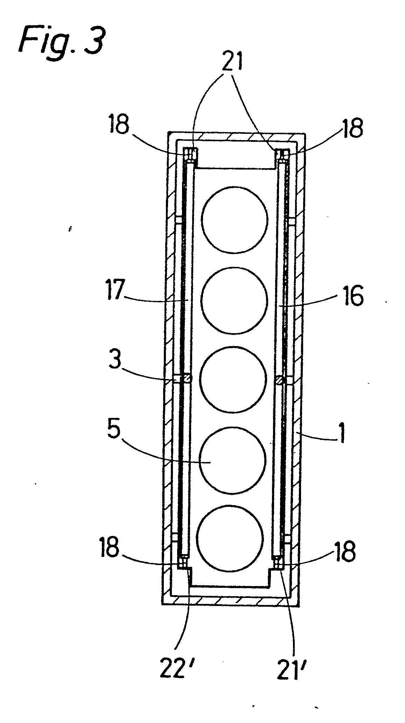

L'extraction du panneau est assurée par un extracteur (fig. 2, 3) comprenant à l'intérieur du moule 4, deux barres métalliques mobiles 16 et 17 disposées en position de moulage contre la paroi du moule 4 faisant face à la porte 2, de part et d'autre de la batterie de tubes fixes 5 et munies à leurs extrémités d'un dispositif de roulement 18, et à l'extérieur du moule 4 et de la chambre de vapeur, de deux vérins 19 dont les tiges 20 traversent la chambre 1 et le moule 4 pour commander le déplacement de deux barres 16, 17. Les extrémités supérieures des barres 16, 17 sont guidées par les rainures 21, 22 du moule destinées à fermer les parois de l'enture femelle du panneau tandis que les extrémités inférieures roulent sur les portées 21', 22' de l'enture mâle.

La chambre de vapeur 1 est également munie d'un conduit 23 permettant l'évacuation du liquide de refroidissement.

Les opérations pour la fabrication d'un panneau sont les suivantes :

On ferme la porte 2 de la chambre 1, les tubes mobiles 10 sont introduits à l'intérieur du moule 4. On introduit par les vannes 13 la matière synthétique partiellement expansée, du polystyrène ou du polyéthylène et ensuite on introduit la vapeur par l'entrée 14. La vapeur traverse les parois perforées du moule 4 y compris les parois de tubes fixes 5 et diffuse à travers la matière synthétique. Après avoir obtenu l'expansion de la matière synthétique on ferme l'entrée 14 de la vapeur et on envoie par l'entrée 15 le liquide de refroidissement qui est de l'eau pulvérisée dans un courant d'air. Le liquide de refroidissement traverse les parois perforées du moule et s'écoule à travers les passages tubulaires verticaux laissés par les tubes mobiles 10 qui se trouvent en position basse lors du refroidissement. Le liquide est évacué à travers les tubes mobiles 10 dont l'extrémité supérieure est perforée et passe à travers leur support creux 11. Le support creux 11 peut avantageusement être relié à des moyens d'aspiration pour accélérer l'évacuation du liquide de refroidissement et pour le cas ou les tubes mobiles sont perforés pour créer lors du moulage une dépression à l'intérieur de ces tubes mobiles favorisant la diffusion rapide de la vapeur dans la matière à expanser. Le liquide de refroidissement est injecté à l'intérieur des tubes fixes 5 par les buses 7 afin que le refroidissement du panneau soit accéléré. Quand la température du panneau est entre 25° et 30 °C on arrête le refroidissement et on ouvre la porte 2, les vérins 19 agissent sur les barres 16, 17 et elles poussent le panneau à l'extérieur du moule en glissant sur les tubes 5. Après avoir refermé la porte 2 on recommence l'opération.

Il est évident que la forme des passages tubulaires du panneau peuvent avoir une section transversale autre que circulaire par exemple rectangulaire, de même les parois latérales du panneau peuvent être munies de gouttières par exemple pour loger des conducteurs électriques ou des éléments décoratifs ou dans un autre but.

Il est possible d'utiliser une chambre de vapeur contenant deux moules si la largeur du panneau est faible.

La même installation peut être utilisée pour la production de panneaux en mousse phénolique ou en polyuréthane qui sont des matières expansées à froid. Evidemment dans ce cas la chambre de vapeur est inutile mais le principe de la réalisation en une pièce d'un panneau présentant deux groupes de passages tubulaires reste le même.

## Revendications

1. Installation pour la fabrication de panneaux en matière synthétique expansée à la vapeur présentant deux groupes de passages tubulaires rectilignes parallèles, croisés, communiquant entre eux, caractérisée par le fait qu'elle comprend une chambre de vapeur étanche parallélépipédique rectangulaire (1) munie d'une porte (2) sur un petit côté, à l'intérieur de laquelle est fixé, à distance des parois de la chambre, un moule (4) fixe tubulaire en tôle perforée, de forme correspondant à la forme extérieure du panneau à obtenir, une première batterie de tubes métalliques (5) perforés parallèles, fixes, à l'intérieur du moule, correspondant à l'un des groupes de passages tubulaires à obtenir dans le panneau, ces tubes présentent des trous latéraux (9) pour le passage d'une seconde batterie de tubes métalliques (10), perforés ou non, solidaires d'un support extérieur mobile (11), traversant l'une des petites parois de la chambre de vapeur et susceptibles de se déplacer perpendiculairement aux tubes de la première batterie en traversant ceux-ci, cette seconde batterie de tubes correspondant au deuxième groupe de passages tubulaires, au moins : une vanne d'entrée (13) pour la matière synthétique partiellement expansée, une entrée (14-15) pour la vapeur et pour un fluide de refroidissement, un extracteur travaillant parallèlement aux tubes du premier groupe pour pousser le panneau moulé hors du moule en le faisant glisser sur les tubes du premier groupe, l'une des extrémités des tubes (5) situés à l'intérieur de la chambre de vapeur est fermée en position de moulage, et munie d'une buse (7) pour l'injection d'un liquide de refroidissement tandis que l'autre communique avec la chambre de vapeur et que les extrémités des tubes mobiles (10) situées à l'extérieur sont ouvertes.

2. Installation selon la revendication 1, caractérisée par le fait qu'elle comprend des moyens pour créer une dépression dans la chambre de vapeur (1) et/ou à l'intérieur d'au moins l'une des batteries de tubes (5, 10).

3. Installation selon la revendication 1 ou 2, caractérisée par le fait que l'une des extrémités des tubes (5) du premier groupe est fermée, en position de moulage, par des zones (6) non perforées de la paroi (8) du moule faisant partie de la porte (2) et munies desdites buses (7).

4. Installation selon l'une des revendications 1 à 3, caractérisée par le fait que les extrémités libres des tubes mobiles (10) sont fermées, en position de moulage, par des zones non perforées de la paroi du moule (4) contre laquelle les tubes viennent en butée et ouvertes en position de démoulage pour permettre l'évacuation du liquide de refroidissement à travers lesdits tubes.

5. Installation selon l'une des revendications 1 à 4, caractérisée par le fait que le support (11) des tubes mobiles est creux, communiquant avec les tubes (10) et relié à des moyens d'aspiration.

**Claims**

1. An apparatus for the manufacture of panels of steamexpanded synthetic material, comprising two groups of rectilinear, parallel, intersecting, intercommunicating tubular passages, characterized in that it comprises a leaktight parallelepipedal rectangular steam chamber (1) provided with a gate (2) on one of the short sides, inside which a tubular fixed mold (4) of perforated steel plate is attached at a distance from the walls of the chamber, the shape of the mold corresponding to the external shape of the panel to be obtained, a first set of fixed, parallel, perforated metal tubes (5) inside the mold, corresponding to one of the groups of tubular passages to be obtained in the panel, these tubes having lateral holes (9) for the passage of a second set of perforated or non-perforated metal tubes (10) fixed to a movable external support (11), passing through one of the short walls of the steam chamber and capable of moving perpendicular to the tubes of the first set, passing through the latter, this second set of tubes corresponding to the second group of tubular passages, and at least : an inlet valve (13) for the partially expanded synthetic material, an inlet (14-15) for the steam and for a cooling fluid, and an extractor working in parallel with the tubes of the first group to push the molded panel out of the mold by causing it to slide over the tubes of the first group, one of the ends of the tubes (5) located inside the steam chamber being closed in the molding position and provided with a nozzle (7) for the injection of a cooling liquid, while the other end communicates with the steam chamber, and that those ends of the movable tubes (10) which are located on the outside are open.

2. The apparatus as claimed in claim 1, characterized in that it comprises means for creating an underpressure in the steam chamber (1) and/or inside at least one of the sets of tubes (5, 10).

3. The apparatus as claimed in claim 1 or 2, characterized in that one of the ends of the tubes (5) of the first group is closed in the molding position by non-perforated zones (6) in that wall (8) of the mold which forms part of the gate (2), the zones being provided with the said nozzles (7).

4. The apparatus as claimed in anyone of claims 1 to 3, characterized in that the free ends of the movable tubes (10) are closed in the molding position by non-perforated zones in that wall of the mold (4) against which the tubes come to bear, said free ends being open in the mold-release position, in order to enable the cooling liquid to be discharged through the said tubes.

5. The apparatus as claimed in anyone of claims 1 to 4, characterized in that the support (11) of the movable tubes is hollow, communicates with the tubes (10) and is connected to suction means.

**Patentansprüche**

1. Vorrichtung zur Herstellung von Kunststoffplatten aus durch Dampf expandiertem synthetischem Material, mit zwei Gruppen von geradlinigen, parallelen, röhrenförmigen Durchführungen, die sich kreuzen und miteinander verbunden sind, dadurch gekennzeichnet, dass sie eine dichte, quaderförmige, rechteckige Dampfkammer (1) mit einer an einer Schmalseite angebrachten Tür (2) aufweist und im Innern der Dampfkammer, im Abstand von den Kammerwänden, eine feststehende röhrenförmige Form aus perforiertem Blech befestigt ist, deren Gestalt der äusseren Form der herzustellenden Platte entspricht, dass im Innern der Form eine erste Batterie von perforierten, parallelen, feststehenden Metallrohren (5), entsprechend einer der Gruppen der in der Platte zu erzeugenden röhrenförmigen Durchführungen, vorgesehen ist, wobei diese Rohre seitliche Löcher (9) zum Durchtritt einer zweiten Batterie von perforierten oder nicht perforierten Metallrohren (10) aufweist, die an einem beweglichen äusseren Trager (11) befestigt sind, eine der Schmalseitenwände der Dampfkammer durchsetzen und senkrecht zu den Rohren der ersten Batterie verschiebbar sind, wobei sie diese Rohre durchsetzen, dass diese zweite Batterie von Rohren der zweiten Gruppe von röhrenförmigen Durchführungen entspricht, dass wenigstens ein Einlassschieber (13) für das teilweise expandierte synthetische Material, ein Einlass (14-15) für dem Dampf und für ein Kühlmittel und eine parallel zu den Rohren der ersten Gruppe arbeitende Ausstossvorrichtung vorgesehen sind, um die geformte Platte, unter Gleiten auf den Rohren der ersten Gruppe, aus der Form zu stossen, dass das eine der Enden der im Innern der Dampfkammer befindlichen Rohre (5) in der der Formung entsprechenden Stellung geschlossen und mit einer Düse (7) zum Einleiten eines Kühlmittels versehen ist, während das andere Ende mit der Dampfkammer in Verbindung steht, und dass die aussen liegenden Enden der beweglichen Rohre (10) geschlossen sind.

2. Vorrichtung nach Anspruch 1, dadurch gekennzeichnet, dass sie Mittel zum Erzeugen eines Unterdrucks in der Dampfkammer (1) und/oder im Innern wenigstens einer der Rohrbatterien (5, 10) aufweist.

3. Vorrichtung nach Anspruch 1 oder 2, dadurch gekennzeichnet, dass das eine der Enden der Rohre (5) der ersten Gruppe in der der Formung entsprechenden Stellung durch nicht perforierte, mit den erwähnten Düsen (7) versehene Zonen (6) der ein Teil der Tür (2) bildenden Wand (8) der Form verschlossen ist.

4. Vorrichtung nach einem der Ansprüche 1 bis 3, dadurch gekennzeichnet, dass die freien Enden der beweglichen Rohre (10) in der der Formung entsprechenden Stellung durch nicht perforierte Zonen derjenigen Wand der Form (4), gegen welche die Rohre anliegen, verschlossen und in der Ausformungsstellung offen sind, um die Entleerung des Kühlmittels durch die erwähnten Rohre zu ermöglichen.

5. Vorrichtung nach einem der Ansprüche 1 bis 4, dadurch gekennzeichnet, dass der Träger (11) der beweglichen Rohre hohl ist, mit den Rohren (10) in Verbindung steht und an Mittel zur Unterdruckerzeugung angeschlossen ist.

Fig.1

*Fig. 2*

**Fig. 3**